# EUROPÄISCHE PATENTSCHRIFT

(11) **EP 3 401 119 B1**
(45) Veröffentlichungstag und Bekanntmachung des Hinweises auf die Patenterteilung: **05.08.2020**
(21) Anmeldenummer: 18171038.5
(22) Anmeldetag: 07.05.2018
(51) Int. Cl.: B60B 19/14, B60B 19/00, B60B 33/06, B62D 61/04, B62D 61/10, B62B 3/06, B62D 37/00

(54) **FAHRZEUG ZUR AUFNAHME VON LASTEN**
VEHICLE FOR CONTAINING LOADS
VÉHICULE DE CHARGEMENT DES CHARGES

(30) Priorität: 08.05.2017 DE 102017207748
(43) Veröffentlichungstag der Anmeldung: 14.11.2018
(73) Patentinhaber: FRAUNHOFER-GESELLSCHAFT zur Förderung der angewandten Forschung e.V., 80686 München (DE)
(72) Erfinder: Schroer, Winfried, 44581 Castrop-Rauxel (DE)
(74) Vertreter: Pfenning, Meinig & Partner mbB

(56) Entgegenhaltungen:
- WO-A1-02/46031
- DE-A1-102007 002 242
- JP-A- H0 492 786
- US-A- 4 359 116
- US-A- 4 515 235

## Beschreibung

Die Erfindung liegt auf dem Gebiet des Maschinenbaus und ist insbesondere im Bereich der Fahrzeugtechnik mit Vorteil einsetzbar. Sie kann beispielsweise in der Logistik bei führerlosen Transportsystemen eingesetzt werden, jedoch auch generell bei Fahrzeugen, die dem Lastentransport dienen, wobei sich besondere Vorteile ergeben, wenn es sich um lenkbare und auf kleinem Raum manövrierbare Fahrzeuge handelt.

Aus dem Stand der Technik und der menschlichen Erfahrung ist bekannt, dass einachsige Fahrzeuge besonders gut lenkbar und auf kleinem Raum manövrierfähig sind. Sollen solche Fahrzeuge autark, d. h. nicht als Anhänger, sondern als selbständiges Fahrzeug eingesetzt werden, so sind so viele Stütz-Rollelemente vorzusehen, dass das Fahrzeug einen stabilen Stand, d. h. eine ausreichend große Standfläche, erhält.

Es sind weiterhin dreirädrige Fahrzeuge bekannt, die eine gute Manövrierfähigkeit aufweisen, jedoch insbesondere bei Kurvenfahrten eine suboptimale Stabilität haben.

Fahrzeuge mit vier und mehr Rädern weisen oft eine hohe Stabilität auf, jedoch ist grundsätzlich die Stützsituation statisch überbestimmt, was üblicherweise durch die Federung von Rädern oder Rollen ausgeglichen wird. Hierdurch ergibt sich jedoch gleichzeitig eine Verteilung des Gewichts auf die Räder, so dass entweder alle Räder angetrieben und gebremst werden müssen oder für die Übertragung der Brems- und Antriebskräfte, wenn dies nur über einen Teil der Räder geschieht, keine optimale Bodenhaftung, d. h. keine maximale Gewichtsbelastung der Antriebs-/Bremsräder erzielt werden kann.

Das Dokument US4515235 A zeigt ein fahrerlos geführtes Fahrzeug, das entlang eines Leitpfades bewegbar ist und eine Radabstützvorrichtung zum Abstützen eines Rades, das in Rollverbindung mit einem Fußboden steht, aufweist. Die Radabstützvorrichtung ist federnd an einem Körper des geführten Fahrzeugs für eine Vertikalbewegung relativ hierzu angebracht. Eine Aufspürvorrichtung zum Aufspüren des Leitpfades und fühlbarer Markierungen entlang des Leitpfades ist unbeweglich an der Radabstützvorrichtung befestigt.

Der vorliegenden Erfindung liegt vor dem Hintergrund des Standes der Technik die Aufgabe zugrunde, ein Fahrzeug zur Aufnahme von Lasten bezüglich der Zahl und Anordnung der Rollelemente zu optimieren.

Die Aufgabe wird mit den Merkmalen der Erfindung durch ein Fahrzeug gemäß Patentanspruch 1 gelöst. Die abhängigen Patentansprüche 2 bis 14 betreffen vorteilhafte Ausgestaltungen.

Demgemäß bezieht sich die Erfindung auf ein Fahrzeug zur Aufnahme von Lasten mit wenigstens einer Lastaufnahmeeinrichtung, die auf einem Rahmen abgestützt ist, mit wenigstens einem Antriebsmotor und mit wenigstens vier den Rahmen tragenden Rollelementen in Form von wenigstens zwei Trag-Rollelementen und zwei Stütz-Rollelementen, wobei zwei der Trag-Rollelemente in Fahrtrichtung des Fahrzeugs nebeneinander angeordnet sind, von denen wenigstens eines, insbesondere zwei, durch einen Antriebsmotor antreibbar sind und wobei in Geradeaus-Fahrtrichtung, die der Längsrichtung des Fahrzeugs entspricht, vor und hinter den Trag-Rollelementen jeweils wenigstens ein Stütz-Rollelement angeordnet ist.

Eine Lösung der Aufgabe gelingt dadurch, dass an dem Rahmen an wenigstens einem Schwenklager schwenkbar wenigstens ein Verbindungsschenkel befestigt ist, an dem eine Rotationslagereinrichtung mit einem darin gelagerten Stütz-Rollelement befestigt ist, und dass die Lastaufnahmeeinrichtung einerseits an dem Verbindungsschenkel zwischen dem Schwenklager und der Rotationslagereinrichtung abgestützt ist und andererseits auf der dem/den Verbindungsschenkel(n) gegenüberliegenden Seite der Trag-Rollelemente, wobei der Verbindungsschenkel als Verbindungsschenkel einer Trapezschwinge ausgebildet ist, der einen ersten Schenkel und einen zweiten Schenkel verbindet, wobei die Trapezschwinge mit dem ersten Schenkel an dem Rahmen befestigt ist, wobei wenigstens eine Rotationslagereinrichtung eines der Stütz-Rollelemente an einem zweiten Schenkel der Trapezschwinge befestigt ist, der dem ersten Schenkel gegenüberliegt, und wobei die Lastaufnahmeeinrichtung an dem den ersten und den zweiten Schenkel gelenkig verbindenden Verbindungsschenkel insbesondere zwischen dem ersten und dem zweiten Schenkel abgestützt ist.

Das Schwenklager weist eine horizontale Schwenkachse auf, so dass der Verbindungsschenkel in einer vertikalen Ebene senkrecht zu der Fahrbahnebene schwenkbar ist, auf der das Fahrzeug fahrbar ist. Es können auch mehrere einzeln schwenkbar gelagerte Verbindungsschenkel vorgesehen sein, an denen jeweils Stütz-Rollelemente drehbar gelagert sind. Die Verbindungsschenkel können jeweils auch Teil einer Trapezanordnung sein, wie weiter unten noch näher erläutert wird.

Die Lastaufnahmeeinrichtung ist jeweils an den Verbindungsschenkeln in einem weiteren Schwenklager beweglich abgestützt, um der Beweglichkeit des/der Verbindungsschenkel gegenüber dem Rahmen Rechnung zu tragen.

Durch die Rotationslager der Trag-Rollelemente ist eine Verbindungslinie zwischen den Rotationslagern definiert, so dass, ausgehend von dieser Verbindungslinie, zwei Seiten diesseits und jenseits der Verbindungslinie, d. h. diesseits und jenseits der Trag-Rollelemente, definiert sind.

Liegt/liegen der/die Verbindungsschenkel und die mit diesen verbundenen Stütz-Rollelemente auf einer ersten Seite dieser Verbindungslinie, die mit einer gemeinsamen Rotationsachse der Trag-Rollelemente identisch sein kann, so liegen auf der zweiten Seite der Verbindungslinie, die der ersten Seite gegenüberliegt, ein oder mehrere weitere Stütz-Rollelemente, deren Rotationslagereinrichtungen mit dem Rahmen starr verbunden sind. Der Schwerpunkt der beladenen oder unbeladenen Lastaufnahmeeinrichtung liegt vorteilhaft über der Verbindungslinie, und eine oder mehrere Abstützelemente der Lastaufnahmeeinrichtung sind auf dem Rahmen auf der dem/den Verbindungsschenkel(n) gegenüberliegenden Seite der Verbindungslinie abgestützt.

Der/die Verbindungsschenkel können als Stangen, Stäbe oder gerade oder gebogene Blechstreifen ausgebildet sein.

Zudem kann vorgesehen sein, dass der erste Schenkel und der zweite Schenkel in Fahrtrichtung des Fahrzeugs in einem Abstand hintereinander angeordnet sind, der kleiner als der zweifache Durchmesser des an dem zweiten Schenkel gelagerten Stütz-Rollelements, insbesondere kleiner als dessen einfacher Durchmesser ist.

Der erste und der zweite Schenkel können parallel zueinander und vertikal zu einer Fahrbahnoberfläche angeordnet sein, auf der sich das Fahrzeug bewegt. Das Fahrzeug kann beispielsweise ein selbstnavigierendes und/oder automatisch gesteuertes und/oder führerloses Fahrzeug sein. Dieses weist eine Navigationseinrichtung und/oder eine Führungseinrichtung zur Leitung des Fahrzeugs an vorbereiteten Fahrspuren auf.

Die Trag-Rollelemente sind nebeneinander angeordnet, und wenigstens eines von ihnen ist antreibbar, so dass die beiden Trag-Rollelemente wenigstens eine Antriebsachse definieren. Zudem kann auch eine Bremse vorgesehen sein, die auf wenigstens eines der Trag-Rollelemente, insbesondere auf beide Trag-Rollelemente, wirkt.

Die Verbindungslinie zwischen den beiden Trag-Rollelementen ist vorteilhaft unterhalb des Schwerpunkts der Lastaufnahmeeinrichtung vorgesehen, wobei bei der Ermittlung des Schwerpunkts eine gleichmäßige Beladung vorausgesetzt ist. Vorteilhaft kann eine gemeinsame Drehachse der Trag-Rollelemente unmittelbar unterhalb des Schwerpunkts der gleichmäßig beladenen Lastaufnahmeeinrichtung oder unterhalb des Schwerpunkts des Fahrzeugs angeordnet sein. Wenn die Last im Wesentlichen über den Trag-Rollelementen vorgesehen ist, ergibt sich bei deren Antrieb ein minimaler Schlupf. Hierdurch wird die Steuerung mittels eines Differenzialantriebs genauer und zuverlässiger.

Um ein ausreichendes Maß an Stand- und Fahrsicherheit zu schaffen und auch für dynamische Belastungen eine sinnvolle Stützung des Fahrzeugs zu erreichen, ist üblicherweise in Fahrtrichtung sowohl vor als auch hinter der Verbindungslinie zwischen den Trag-Rollelementen jeweils wenigstens ein Stütz-Rollelement vorgesehen. Üblicherweise werden bei solchen Fahrzeugen mit wenigstens vier Rädern ein oder mehrere Räder gefedert, um einen Bodenkontakt aller Räder bei verschiedenen statischen und dynamischen Belastungszuständen und auch bei unebenen Fahrbahnoberflächen zu garantieren. Das Problem, das sich dabei stellt, ist, dass einerseits ein ausreichend langer Federweg der Rollelemente gewährleistet werden muss, damit ein dauernder Bodenkontakt garantiert werden kann, und dass andererseits die Steifheit der Federung derart gestaltet sein soll, dass keine Nickbewegungen oder Schwingungen des Fahrzeugs während der Fahrt auftreten.

Üblicherweise ist die Funktionstüchtigkeit eines derartigen Fahrzeugs, wenn einzelne Rollelemente gefedert sind, vom Verhältnis der Nutzlast zum Fahrzeugeigengewicht abhängig. Je höher das anteilige zulässige Zuladegewicht ist, desto schwieriger wird es, die Federung so zu gestalten, dass sie sowohl das leere als auch das belastete Fahrzeug in einem sinnvollen Bereich federt. Oft werden deshalb Fahrzeuge zur Aufnahme von Lasten absichtlich schwer ausgeführt oder mit einem Ballastgewicht ausgestattet, um das Leergewicht zu erhöhen.

Gemäß der beschriebenen Ausführungsform ist eines der Stütz-Rollelemente mittels einer Trapezschwinge an dem Rahmen des Fahrzeugs befestigt. Hierdurch ergibt sich, dass auch bei einer Belastungsänderung eine gerade oder zumindest bezüglich des Neigungswinkels unveränderte Position des Stütz-Rollelements und seiner Befestigungsvorrichtung beibehalten wird. Dadurch wird beispielsweise bei Verwendung einer Lenkbockrolle ein Einschlagen / eine Drehung der Rolle bei einer Laständerung vermieden. Dies lässt zudem eine Bewegung des Stütz-Rollelements in vertikaler Richtung zu, ohne dass die Lastaufnahmeeinrichtung dieser Bewegung in vollem Umfang folgt, das heißt, die Lastaufnahmeeinrichtung bewegt sich bei geeigneter Wahl der Hebelverhältnisse nur minimal.

Eine vorteilhafte Ausgestaltung der Erfindung liegt darin, dass der Schwerpunkt des Fahrzeugs in Ruhelage auf horizontaler Unterlage in Längsrichtung des Fahrzeugs auf der der Trapezschwinge oder dem/den Verbindungsschenkel(n) gegenüberliegenden Seite der Trag-Rollelemente liegt. Das Stütz-Rollelement, das an der Trapezschwinge befestigt ist, trägt somit bis auf dynamische Ausnahmefälle nur einen sehr geringen Teil des Fahrzeuggewichts, unabhängig davon, ob dieses beladen ist oder nicht. Der Großteil des Gewichts liegt auf der Achse / gemeinsamen Achse oder den Achsen der Trag-Rollelemente, die auch dem Antrieb und der Übertragung der Bremsverzögerung dienen.

Zudem kann vorgesehen sein, dass der Rahmen und der Verbindungsschenkel frei von Federelementen miteinander verbunden sind.

Auch die Lastaufnahmeeinrichtung und der Rahmen sowie der Verbindungsschenkel oder alle gelenkig miteinander verbundenen Teile des Fahrzeugs können federelementfrei miteinander verbunden sein. Die Kräfte zwischen diesen Teilen sind dann ausschließlich durch die Hebelgesetze und die Dynamik bestimmt. Das Fahrgestell des Fahrzeugs kann somit auch vollständig ungefedert sein.

Vorteilhaft wird die Trapezschwinge dadurch gefedert, dass zwischen wenigstens zwei der Schenkel der Trapezschwinge ein Federelement angeordnet ist. Die Punkte an der Trapezschwinge, d. h. an wenigstens zwei verschiedenen Schenkeln der Trapezschwinge, an denen das Federelement befestigt wird, können derart ausgewählt werden, dass die Hebelverhältnisse und die Stärke und Federkonstante der Feder geeignet zur Federung des Fahrzeugs entlang eines ausreichenden Federwegs gestaltet sind.

Allgemein kann ein federndes Verbindungselement zwischen einem Verbindungsschenkel und dem Rahmen des Fahrzeugs vorgesehen sein.

Eine weitere vorteilhafte Ausführungsform der Erfindung kann vorsehen, dass die Lastaufnahmeeinrichtung an dem Verbindungsschenkel zwischen dem ersten und dem zweiten Schenkel der Trapezschwinge an einem Bereich abgestützt ist, der dem ersten Schenkel näher liegt als dem zweiten Schenkel oder dem Schwenklager näher als der Rotationslagereinrichtung des/der an dem Verbindungsschenkel gelagerten Stütz-Rollelemente. Durch diese Gestaltung führt ein langer Federweg des gefederten Stütz-Rollelements nur zu einer geringen Auslenkung des Rahmens bzw. der aufgenommenen Last.

Die Trag-Rollelemente sind vorteilhaft als Räder ausgebildet, insbesondere als Vollgummiräder oder als luftgefüllte oder mit einem anderen Fluid als Luft gefüllte Räder. Sie können jedoch grundsätzlich auch als gelagerte Kugelelemente ausgebildet sein.

Vorteilhaft kann zudem vorgesehen sein, dass jedes der Trag-Rollelemente mittels je eines Antriebsmotors antreibbar ist. Mit einem derartigen unabhängigen Antriebsmotor für jedes der Trag-Rollelemente kann das Fahrzeug durch eine geeignete abgestimmte Steuerung der Antriebsmotoren gelenkt werden. Durch eine Erfassung der Drehwinkel der Trag-Rollelemente kann sowohl der zurückgelegte Weg des Fahrzeugs als auch seine Ausrichtung bestimmt oder ermittelt werden. Beispielsweise lässt sich durch einen derartigen Antrieb das Fahrzeug unmittelbar auf der Stelle um eine vertikale Achse drehen, wobei ein minimaler Raum für eine solche Drehbewegung des Fahrzeugs eingenommen wird. Eine besonders vorteilhafte Anordnung ist dabei durch eine mittige Anordnung der Trag-Rollelemente in Längsrichtung des Fahrzeugs gegeben. Die Beschleunigung und das Abbremsen des Fahrzeugs gelingt durch gleichzeitigen Antrieb beider Antriebsmotoren in optimaler Weise. Die Gewichtsverteilung zwischen den Trag-Rollelementen und einem Stütz-Rollelement kann beispielsweise derart gestaltet sein, dass wenigstens zwei Drittel des Fahrzeuggewichts auf den Trag-Rollelementen ruhen, während höchstens ein Drittel des Fahrzeuggewichts auf einem Stütz-Rollelement ruht.

Durch geeignete Wahl der Hebelverhältnisse kann der Andruck der Roll-Stützelemente maximiert und der Andruck der Stütz-Rollelemente minimiert werden. Hierdurch können die Stütz-Rollelemente besonders leicht, beispielsweise als Kugelrollen oder omnidirektionale Rollen, ausgeführt werden, die Vorteile vor Lenkbockrollen haben.

Zur Lenkung und Navigation des Fahrzeugs kann vorteilhaft eine gemeinsame Steuereinrichtung zur abgestimmten Ansteuerung der wenigstens zwei Antriebsmotoren der Trag-Rollelemente zur Lenkung des Fahrzeugs vorgesehen sein.

Die Steuerung kann, wie oben erwähnt, odometrisch erfolgen, d. h. durch Ermitteln der Drehwinkel der angetriebenen Räder/Trag-Rollelemente. Die Antriebsmotoren sind als Drehgeber ausgebildet, beispielsweise in Form von elektrischen Schrittmotoren. Damit kann der Drehwinkel der Antriebsräder unmittelbar an den Motoren erfasst werden.

Eine weitere vorteilhafte Ausgestaltung der Erfindung kann vorsehen, dass Antriebsmotoren als bürstenlose Elektromotoren ausgebildet sind. Solche Elektromotoren weisen eine hohe Effizienz bei gleichzeitig großem Drehmoment auf. Sie sind zudem sehr flexibel steuerbar, insbesondere durch die Ansteuerung in Form von pulsweitenmodulierten Signalen.

Es kann auch vorteilhaft vorgesehen sein, dass jedes der Trag-Rollelemente und/oder jeder der Antriebsmotoren eine Sensoreinrichtung zur Erfassung eines Drehwinkels aufweist. In diesem Fall werden die Drehwinkel der Trag-Rollelemente durch gesonderte Sensoren, beispielsweise Hall-Sensoren, erfasst. Drehwinkel können auch am Antriebsmotor durch einen Sensor in Form einer Einrichtung zur Messung der elektromagnetischen Rückwirkung der Statorwicklung des Motors realisiert sein.

Eine weitere vorteilhafte Ausgestaltung der Erfindung kann vorsehen, dass die Stütz-Rollelemente als Räder oder drehbar gelagerte Kugeln ausgebildet sind. Die Ausbildung der Stütz-Rollelemente als gelagerte Kugeln hat vor der Ausgestaltung als lenkbare Rollen den Vorteil, dass bei der Richtungsänderung des Fahrzeugs lenkbare Rollen jeweils das Schwenken des Stützrades erfordern, wodurch einerseits ein Bewegungswiderstand erzeugt und andererseits in vielen Fällen der minimale Wenderadius des Fahrzeugs vergrößert wird. Der Einsatz von lenkbaren Rollen in Form von Rädern ist jedoch wegen deren hoher mechanischer Belastbarkeit in vielen Fällen ebenfalls vorteilhaft.

Als weitere vorteilhafte Ausgestaltung der Erfindung kann vorgesehen sein, dass in Längsrichtung des Fahrzeugs auf der der oder den Trapezschwinge(n) oder dem/den Verbindungsschenkel(n) gegenüberliegenden Seite der Trag-Rollelemente ausschließlich Stütz-Rollelemente vorgesehen sind, deren Rotationslager an dem Rahmen unbeweglich befestigt sind. Grundsätzlich ist jedoch nicht ausgeschlossen, dass an einem Fahrzeug auch mehrere mittels einer Trapezschwinge in der oben beschriebenen Art bewegliche Stütz-Rollelemente vorgesehen sind.

Eine weitere vorteilhafte Ausgestaltung sieht ein Fahrzeug mit zwei in Fahrtrichtung vor den Trag-Rollelementen angeordneten Stütz-Rollelementen und zwei in Fahrtrichtung hinter den Trag-Rollelementen angeordneten Stütz-Rollelementen vor, wobei wenigstens zwei, insbesondere alle vier Stütz-Rollelemente an jeweils einem schwenkbar an dem Rahmen gelagerten Verbindungsschenkel gelagert sind und wobei die Lastaufnahmerichtung jeweils an den Verbindungsschenkeln abgestützt ist.

In einer weiteren Ausführungsform kann bei einem Fahrzeug vorgesehen sein, dass zwischen wenigstens einer der Stütz-Rollelemente und der Lastaufnahmeeinrichtung eine antreibbare Verstelleinrichtung vorgesehen ist, die das Anheben der Lastaufnahmeeinrichtung gegenüber dem/den Stütz-Rollelement(en) ermöglicht.

Durch die dargestellten Ausführungsformen kann im Übrigen erreicht werden, dass der Anteil der Traglast auf den einzelnen Rädern unabhängig von der Traglast gleich bleibt. Alle Räder behalten zudem ständig Bodenkontakt, so dass ein stabiler Stand gewährleistet ist.

Das Fahrwerk ist nachgiebig und folgt den Bodenunebenheiten. Die Lastaufnahmeeinrichtung behält dabei ihre Höhe unabhängig von der Traglast bei. Bodenunebenheiten könne durch die beschriebenen passiven Elemente ausgeglichen werden.

Im Folgenden wird die Erfindung anhand von Figuren einer Zeichnung gezeigt und nachfolgend erläutert. Dabei zeigt
- Fig. 1: eine perspektivische Ansicht eines ersten Fahrzeugs schräg von oben,
- Fig. 2: eine perspektivische Ansicht des Fahrzeugs aus Figur 1 schräg von unten,
- Fig. 3: eine Seitenansicht eines ersten Fahrzeugs,
- Fig. 4: eine Ansicht von unten auf ein erstes Fahrzeug,
- Fig. 5: eine Schnittdarstellung durch ein erstes Fahrzeug,
- Fig. 6: ein vergrößertes Detail aus der Schnittdarstellung der Figur 5,
- Fig. 7: eine perspektivische Ansicht eines zweiten Fahrzeugs von oben,
- Fig. 8: eine perspektivische Ansicht des Fahrzeugs aus Figur 7 schräg von unten,
- Fig. 9: eine Seitenansicht des Fahrzeugs aus Figur 7,
- Fig. 10: eine Ansicht des Fahrzeugs aus Figur 7 von unten,
- Fig. 11: eine Schnittansicht des Fahrzeugs aus Figur 7,
- Fig. 12: eine Detailansicht aus der Schnittansicht der Figur 11,
- Fig. 13: eine Seitenansicht eines weiteren Fahrzeugs, bei dem die Hebelverhältnisse deutlich sichtbar gemacht sind,
- Fig. 14: eine Ansicht der Unterseite eines Fahrzeugs aus Figur 13, in der vier Stütz-Rollelemente erkennbar sind,
- Fig. 15: eine Seitenansicht eines weiteren Fahrzeugs mit Rädern,
- Fig. 16: eine Ansicht eines Fahrzeugs mit Rollkugeln als Stütz-Roll-elementen perspektivisch von unten,
- Fig. 17: ein Fahrzeug in einer Seitenansicht mit einer Hebeeinrichtung zum Anheben der Lastaufnahmeeinrichtung sowie
- Fig. 18: das Fahrzeug aus Figur 17 in einer angehobenen Position der Lastaufnahmeeinrichtung.

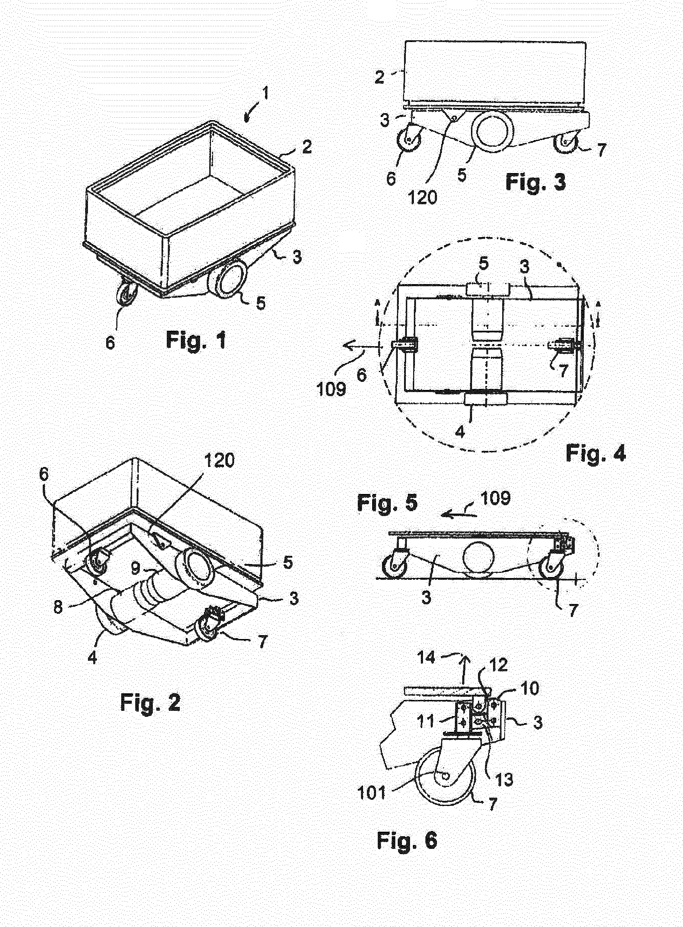

Figur 1 zeigt ein Fahrzeug 1 mit einer Lastaufnahmeeinrichtung 2 in Form eines Kastens, der auf einem Rahmen 3 abgestützt ist. Von zwei Trag-Rollelementen 4, 5, die den Rahmen 3 tragen, ist in Figur 1 eines dargestellt. Zudem ist in Figur 1 ein Stütz-Rollelement 6 dargestellt.

In Figur 2 ist in der Ansicht von unten der Rahmen 3, der beispielsweise aus einem Stahlblech bestehen kann, vollständig erkennbar. Zudem sind die beiden Trag-Rollelemente 4, 5 dargestellt, von denen jedes mit einem Antriebsmotor 8, 9 verbunden ist. Die Trag-Rollelemente 4, 5 sind als Räder in Form von Pneus ausgebildet und koaxial zueinander gelagert, so dass sie gemeinsam eine Antriebsachse festlegen. Das Stütz-Rollelement 6 ist in Form eines Rades fest an den Rahmen 3 angeschlagen.

Das Stütz-Rollelement 6 liegt auf einer ersten Seite der Trag-Rollelemente 4, 5, während auf der gegenüberliegenden Seite an dem dem Stütz-Rollelement 6 gegenüberliegenden Ende des Rahmens 3 ein weiteres Stütz-Rollelement 7, ebenfalls in Form eines Rades, angeordnet ist. Das Stütz-Rollelement 7 ist an den Rahmen 3 nicht direkt angeschlagen, sondern mit diesem mittels einer Trapezschwinge verbunden. Auf diese wird weiter unten noch näher eingegangen.

Die Stütz- und Trag-Rollelemente 4, 5, 6, 7 sind von der Unterseite des Fahrzeugs gesehen rautenförmig (an den Ecken einer Raute) angeordnet.

In Figur 3 ist eine Seitenansicht des Fahrzeugs gezeigt, in der sowohl die Lastaufnahmeeinrichtung 2 als auch der Rahmen 3, die Stütz-Rollelemente 6, 7 und eines der Trag-Rollelemente 5 erkennbar sind.

Figur 4 zeigt eine Ansicht des Fahrzeugs von der Unterseite, wobei der Rahmen 3, die Stütz-Rollelemente 6, 7 sowie die Trag-Rollelemente 4, 5 dargestellt sind.

In Figur 5 ist das Fahrzeug in einem Längsschnitt entlang der Linie A-A der Figur 4 dargestellt, wodurch die Aufhängung des Stütz-Rollelements 7 an dem Rahmen 3 in Form einer Trapezschwinge sichtbar wird. Die Trapezschwinge ist in Figur 6 vergrößert dargestellt.

Die Figur 6 zeigt, dass ein erster Schenkel 10 der Trapezschwinge an dem Rahmen 3 im Bereich einer Stirnseite des Fahrzeugs befestigt ist. Der gegenüberliegende zweite Schenkel 11 der Trapezschwinge ist fest mit dem Rad 7 verbunden, das ein Stütz-Rollelement des Fahrzeugs bildet. Es sind an der Trapezschwinge zudem ein oberer, erster Verbindungsschenkel 12 und ein unterer, zweiter Verbindungsschenkel 13 vorgesehen, wobei jeder der Verbindungsschenkel 12, 13 jeweils zwei Enden der Schenkel 10, 11 miteinander gelenkig verbindet. Dies führt dazu, dass der zweite Schenkel 11 ausschließlich in Richtung des Pfeils 14, d. h. senkrecht zur Fahrbahnoberfläche, verschiebbar ist. Der erste und zweite Schenkel und die Verbindungsschenkel bilden ein Parallelogramm, wobei die Verbindungsschenkel, jeweils zwischen den Gelenken gemessen, kürzer als die dreifache, zweifache oder einfache Länge des ersten und zweiten Schenkels sein können. Es kann auch vorgesehen sein, dass der Verbindungsschenkel oder der erste Verbindungsschenkel kürzer als das Zweifache oder das Einfache des Durchmessers des Stütz-Rollelements ist, dessen Lager an dem Verbindungsschenkel oder an dem Parallelogramm befestigt ist. Das Stütz-Rollelement 7 ist in vertikaler Richtung verschiebbar und kann somit gegen die Fahrbahnoberfläche gedrückt werden, so dass das Fahrzeug mit allen vier Rollelementen die Fahrbahnoberfläche berührt. Dabei kann das gesamte Fahrgestell des Fahrzeugs ungefedert und frei von Federelementen sein, da die Hebelverhältnisse der verschiedenen Schenkel für einen Andruck aller Rollen an Untergrund sorgen.

Aus den Figuren 2 und 6 ist auch ersichtlich, dass die Lastaufnahmeeinrichtung in Fahrtrichtung gesehen vor und hinter der Verbindungslinie zwischen den Trag-Rollelementen jeweils in einem Schwenkgelenk abgestützt ist, damit die Abstützung sich Laständerungen anpassen kann. Wenigstens einer der Abstützpunkte, insbesondere das Schwenkgelenk, das unmittelbar am Rahmen angeordnet ist, kann zur Anpassung an eine Beladungssituation horizontal verschiebbar sein.

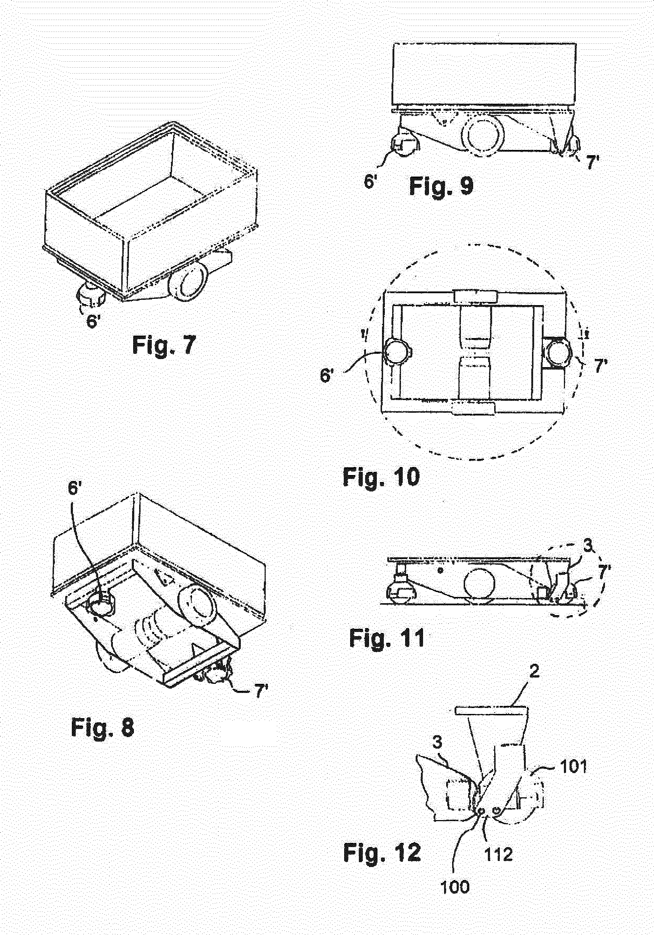

In Figur 7 ist ein erfindungsgemäßes Fahrzeug in leicht veränderter Ausführungsform dargestellt, wobei Figur 7 in der Ansicht mit Figur 1 vergleichbar ist. Der Unterschied der Fahrzeuge der Figuren 1 und 7 liegt darin, dass das Fahrzeug gemäß Figur 7 an seinem stirnseitigen Ende ein Stütz-Rollelement 6' in Form einer drehbar gelagerten Kugel aufweist, wodurch das Fahrzeug auf dem Stütz-Rollelement 6' in jeder Richtung rollbar ist.

Aus Figur 8 ist ersichtlich, dass beide Stütz-Rollelemente 6', 7' an den beiden stirnseitigen Enden des Fahrzeugs als Kugelelemente ausgebildet sind.

In Figur 9 sind die Stütz-Rollelemente 6', 7' in einer Seitenansicht zu erkennen, und in Figur 10 in einer Ansicht der Unterseite des Fahrzeugs.

Figur 11 zeigt, dass das Stütz-Rollelement 7' ebenso wie das Stütz-Rollelement 7 der ersten Fahrzeugausführung mittels einer Trapezschwinge an dem Rahmen 3 befestigt ist.

Figur 12 zeigt in vergrößerter Form die Verbindung des Stütz-Rollelements 7' mit dem Rahmen, wobei die Trapezschwinge durch eine Verkleidung verdeckt ist. Die Aufhängung des Stütz-Rollelements 7' an dem Rahmen ist ebenso gestaltet wie die Aufhängung des Stütz-Rollelements 7 an den Rahmen 3 gemäß der Figur 6.

Die erfindungsgemäße Ausgestaltung des Fahrzeugs erlaubt es, einen möglichst großen Anteil des Gesamtgewichts des Fahrzeugs auf den Trag-Rollelementen 4, 5 zu lagern, während ein geringer Anteil des Gewichts auf dem Stütz-Rollelement 6, 6' lagern kann. Das weitere Stütz-Rollelement 7, 7' kann derart gestaltet und angeordnet sein, dass es in der Ruheposition praktisch keinen Anteil des Gewichts des Fahrzeugs und/oder der Last aufnimmt und lediglich mittels der Trapezschwinge an die Fahrbahnoberfläche gedrückt ist. Beim Auftreten dynamischer Lasten, beispielsweise beim Beschleunigen, nimmt das Stütz-Rollelement 7, 7' jedoch eine Teillast des Fahrzeugs auf.

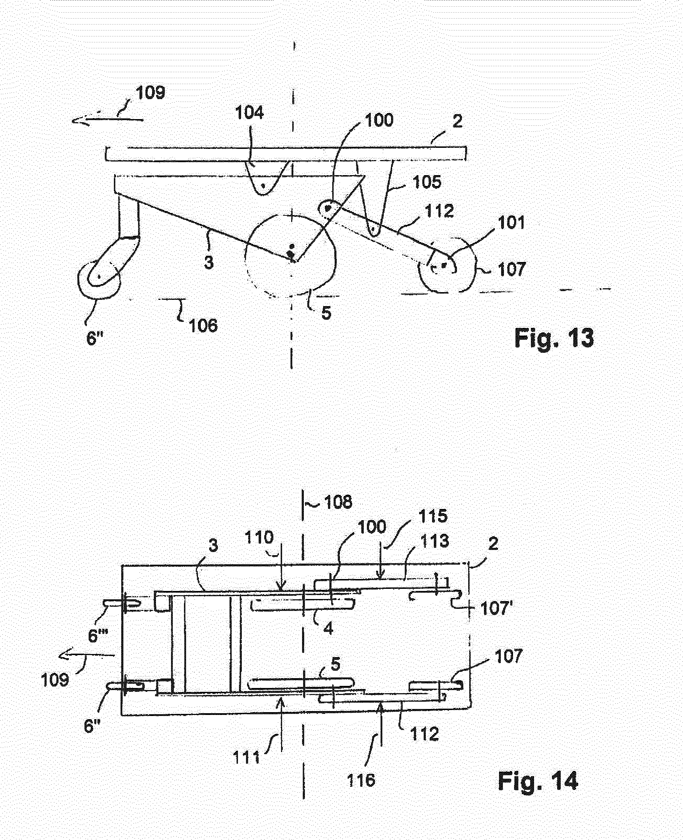

Figur 13 zeigt eine Darstellung, bei der schematisch die Hebelverhältnisse der gegeneinander beweglichen Teile deutlich gemacht sind. Das Fahrzeug, das in den Figuren 13 und 14 dargestellt ist, weist zwei Trag-Rollelemente 4, 5 in Form von einzeln antreibbaren Rädern auf, deren Lager durch eine vorgestellte Verbindungslinie 108 verbunden sind. Der Schwerpunkt des Fahrzeugs liegt idealerweise oberhalb der Verbindungslinie 108. In Fahrtrichtung 109 vor der Verbindungslinie 108 liegen zwei Stütz-Rollelemente 6", 6'" in Form von Rädern, deren Rotationslager fest mit dem Rahmen 3 verbunden sind. In Fahrtrichtung 109 hinter der Verbindungslinie 108 liegen zwei Stütz-Rollelemente 107, 107' in Form von Rädern, die gegenüber dem Rahmen in vertikaler Richtung, d. h. senkrecht zu einer Fahrbahnoberfläche 106, auf der das Fahrzeug sich bewegt, durch eine Schwenkbewegung des/der Verbindungsschenkel 112, 113 beweglich sind.

Die Verbindungsschenkel 112, 113 sind in je einem Schwenklager 100 an den Rahmen angelenkt und in einer vertikalen Ebene schwenkbar. An den Verbindungsschenkeln 112, 113 sind die Rotationslagereinrichtungen 101 der Räder 107, 107' befestigt. Entlang der Verbindungsschenkel 112, 113 sind zwischen den Schwenklagern 100 und den Rotationslagereinrichtungen 101 Stützelemente 105 abgestützt, die mit der Lastaufnahmeeinrichtung 2 verbunden sind. Auf der den Stützelementen 105 gegenüberliegenden Seite der Verbindungslinie 108 sind weitere, mit der Lastaufnahmeeinrichtung verbundene Stützelemente 104 direkt an dem Rahmen 3 abgestützt.

Jede der Rollen 6", 6"', 107, 107' kann durch ein anderes Stütz-Rollelement, beispielsweise eine in einer Rotationslagereinrichtung drehbare Kugel, ersetzt werden, wobei die Befestigung oder Anlenkung der Stütz-Rollelemente an dem Rahmen 3 unverändert bleibt.

In Figur 14 sind die Abstützstellen, an denen die Lastaufnahmeeinrichtung 2 mittels der Abstützelemente 104, 105 an dem Rahmen 3 abgestützt ist, durch die Pfeile 110, 111, 115, 116 kenntlich gemacht.

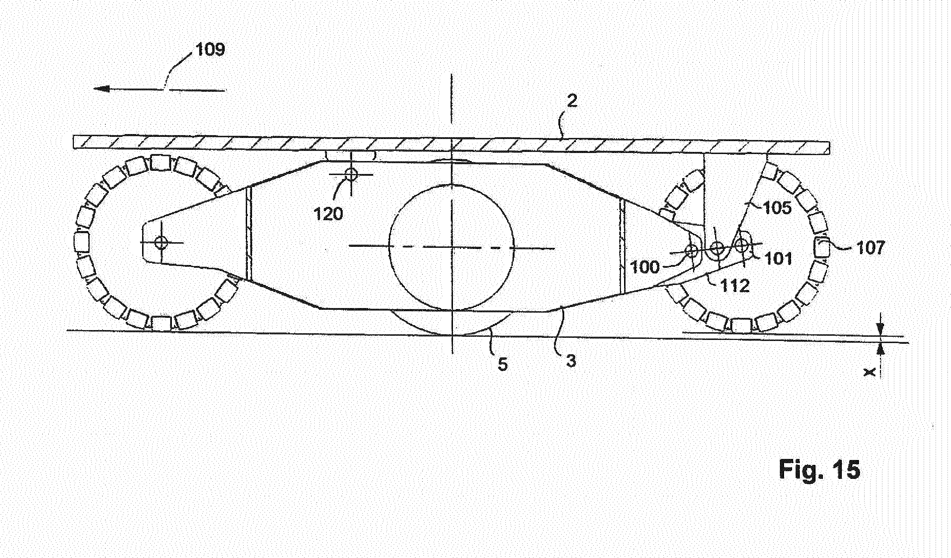

In Figur 15 ist ein Fahrzeug mit einem Rahmen 3 und einer Lastaufnahmeeinrichtung 2 in Form einer Ladefläche 2 gezeigt, die an dem Schwenkgelenk 120 an dem Rahmen und mittels des Stützelements 105 an dem Verbindungsschenkel 112 abgestützt ist. Der Verbindungsschenkel ist an dem Schwenkgelenk 100 schwenkbar gelagert. An dem dem Gelenk 100 gegenüberliegenden Ende ist an dem Verbindungsschenkel 112 das Rad 107 drehbar gelagert. Das Stützelement 105 ist am Verbindungsschenkel 112 in der Mitte zwischen dem Lager des Rades 107 und dem Schwenkgelenk 100 beweglich abgestützt.

Der durch das schwenkbare Rad 107 ausgeglichene Höhenunterschied in der Fahrbahnoberfläche 106 ist mit "x" bezeichnet.

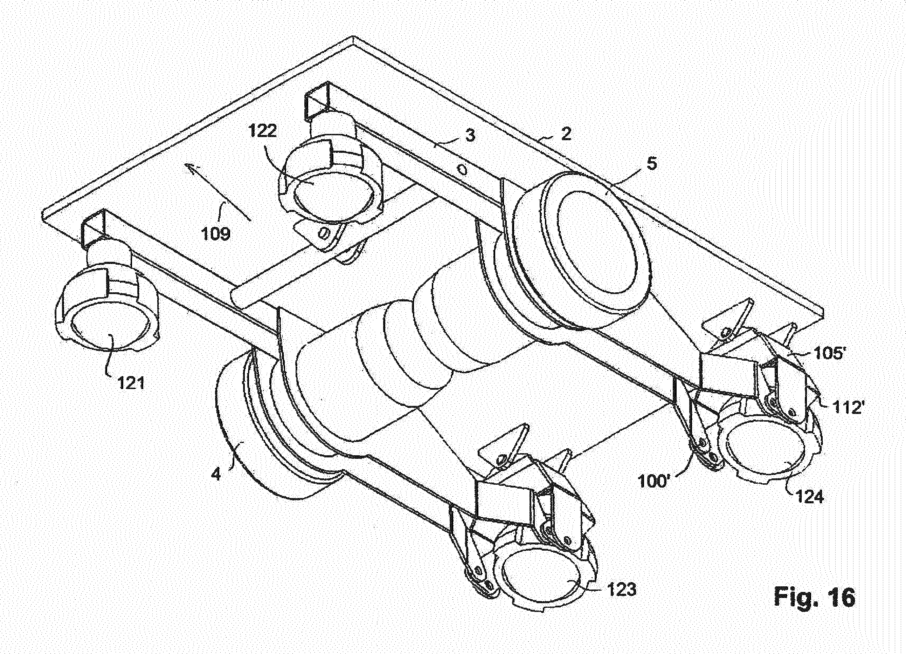

Figur 16 zeigt ein Fahrzeug mit einer Lastaufnahmeeinrichtung 2, die an einem Rahmen 3 abgestützt ist. Die Trag-Rollelemente 4, 5 sind als Räder mit einer gemeinsamen Antriebsachse, jedoch separaten Antriebsmotoren ausgebildet.

Die in Fahrtrichtung 109 vorderen Stütz-Rollelemente sind als drehbar gelagerte Rollkugeln 121, 122 direkt an dem Rahmen 3 gelagert. Die Stütz-Rollelemente 123, 124 sind als Rollkugeln an dem Verbindungshebel 112' gelagert. Dieser ist in dem Schwenkgelenk 100' am Rahmen 3 angelenkt. An dem Verbindungshebel 112' stützt sich das Abstützelement 105' ab, das die Lastaufnahme 2 trägt. Das Abstützelement 105' sowie der Verbindungshebel 112' sind bügelförmig halbrund als gebogene Bleche ausgebildet, und alle Gelenk- und Abstützpunkte sind für jedes der Stütz-Rollelemente 123, 124 doppelt vorgesehen.

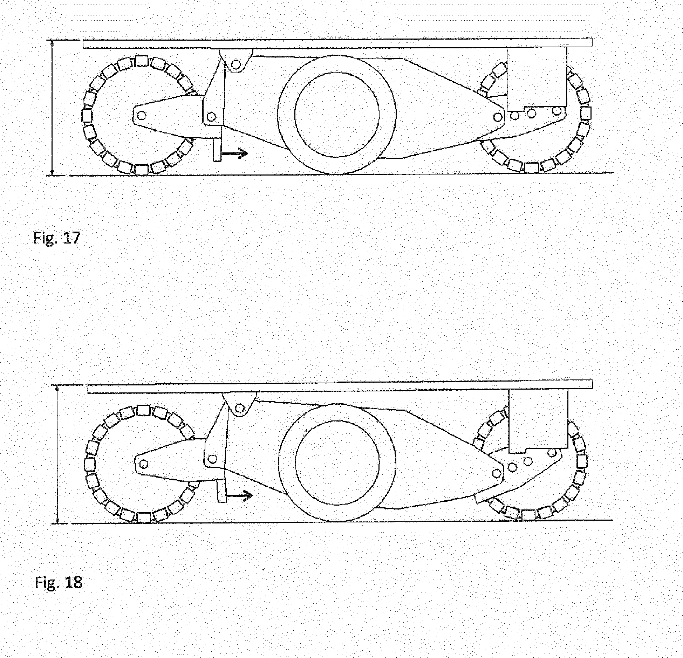

Figur 17 zeigt ein Fahrzeug, bei dem eine Hebeeinrichtung zum Anheben der Lastaufnahmeeinrichtung vorgesehen ist. Das Anheben der Lastaufnahmeeinrichtung erfolgt durch Schwenken des Arms, an dem das Stütz-Rollelement angeordnet ist, im Sinne des eingezeichneten Doppelpfeils.

Figur 18 zeigt eine angehobene Position der Lastaufnahmeeinrichtung, nachdem der Arm, an dem das Stütz-Rollelement gelagert ist, zur Achse der Trag-Rollelemente hin geschwenkt wurde. Dies kann z. B. durch einen Zugmittelantrieb, beispielsweise das Aufwickeln eines Zugseils, geschehen.

## Patentansprüche

1. Fahrzeug zur Aufnahme von Lasten mit wenigstens einer Lastaufnahmeeinrichtung (2), die auf einem Rahmen (3) abgestützt ist, mit wenigstens einem Antriebsmotor (8, 9) und mit wenigstens vier den Rahmen tragenden Rollelementen (4, 5, 6, 6', 7, 7') in Form von wenigstens zwei Trag-Rollelementen (4, 5) und wenigstens zwei Stütz-Rollelementen (6, 6', 7, 7'), wobei zwei der Trag-Rollelemente in Fahrtrichtung des Fahrzeugs nebeneinander angeordnet sind, von denen wenigstens eines, insbesondere zwei, durch einen Antriebsmotor (8, 9) antreibbar sind und wobei in Geradeaus-Fahrtrichtung, die der Längsrichtung des Fahrzeugs entspricht, vor und hinter den Trag-Rollelementen (4, 5) jeweils wenigstens ein Stütz-Rollelement (6, 6', 6", 6'", 7, 7', 107, 107') angeordnet ist,
**dadurch gekennzeichnet, dass**
an dem Rahmen (3) an wenigstens einem Schwenklager (100) schwenkbar wenigstens ein Verbindungsschenkel (12, 13, 112, 113) befestigt ist, an dem eine Rotationslagereinrichtung (101) mit einem darin gelagerten Stütz-Rollelement (7, 7', 107) befestigt ist,
und dass die Lastaufnahmeeinrichtung einerseits an dem Verbindungsschenkel (12, 13, 112) zwischen dem Schwenklager (100) und der Rotationslagereinrichtung (101) abgestützt ist und andererseits auf der dem/den Verbindungsschenkel(n) (12, 13, 112, 113) gegenüberliegenden Seite der Trag-Rollelemente (4, 5),
wobei der Verbindungsschenkel (12, 13, 112, 113) als Verbindungsschenkel einer Trapezschwinge ausgebildet ist, der einen ersten Schenkel (10) und einen zweiten Schenkel (11) verbindet, wobei die Trapezschwinge (10, 11, 12, 13) mit dem ersten Schenkel (10) an dem Rahmen (3) befestigt ist, wobei wenigstens eine Rotationslagereinrichtung (101) eines der Stütz-Rollelemente (7) an einem zweiten Schenkel (11) der Trapezschwinge befestigt ist, der dem ersten Schenkel gegenüberliegt, und wobei die Lastaufnahmeeinrichtung an dem den ersten und den zweiten Schenkel (10, 11) gelenkig verbindenden Verbindungsschenkel (12, 13) insbesondere zwischen dem ersten und dem zweiten Schenkel abgestützt ist.

2. Fahrzeug nach Anspruch 1, **dadurch gekennzeichnet, dass** der erste Schenkel (10) und der zweite Schenkel (11) in Fahrtrichtung des Fahrzeugs in einem Abstand hintereinander angeordnet sind, der kleiner als der zweifache Durchmesser des an dem zweiten Schenkel (11) gelagerten Stütz-Rollelements, insbesondere kleiner als dessen einfacher Durchmesser ist.

3. Fahrzeug nach Anspruch 1 oder 2, **dadurch gekennzeichnet, dass** der Schwerpunkt des Fahrzeugs in Ruhelage auf horizontaler Unterlage in Längsrichtung des Fahrzeugs auf der der Trapezschwinge (10, 11, 12, 13) oder dem Verbindungsschenkel (12, 13, 112, 113) gegenüberliegenden Seite der Trag-Rollelemente (4, 5) liegt.

4. Fahrzeug nach einem der Ansprüche 1 bis 3, **dadurch gekennzeichnet, dass** der Rahmen und der Verbindungsschenkel frei von Federelementen miteinander verbunden sind.

5. Fahrzeug nach einem der vorangehenden Ansprüche, **dadurch gekennzeichnet, dass** die Lastaufnahmeeinrichtung (2) an dem Verbindungsschenkel (12, 13, 112) zwischen dem ersten und dem zweiten Schenkel an einem Bereich abgestützt ist, der dem ersten Schenkel (10) näher liegt als dem zweiten Schenkel (11) oder dem Schwenklager (100) näher als der Rotationslagereinrichtung (101).

6. Fahrzeug nach einem der vorangehenden Ansprüche, **dadurch gekennzeichnet, dass** die Trag-Rollelemente (4, 5) als Räder ausgebildet sind.

7. Fahrzeug nach einem der vorangehenden Ansprüche, **dadurch gekennzeichnet, dass** jedes der Trag-Rollelemente (4, 5) mittels je eines Antriebsmotors (8, 9) antreibbar ist.

8. Fahrzeug nach Anspruch 7, **dadurch gekennzeichnet, dass** eine gemeinsame Steuereinrichtung zur abgestimmten Ansteuerung der wenigstens zwei Antriebsmotoren (8, 9) der Trag-Rollelemente (4, 5) zur Lenkung des Fahrzeugs vorgesehen ist.

9. Fahrzeug nach einem der vorangehenden Ansprüche, **dadurch gekennzeichnet, dass** die Antriebsmotoren (8, 9) als regelbare Elektromotoren ausgebildet sind.

10. Fahrzeug nach einem der vorangehenden Ansprüche, **dadurch gekennzeichnet, dass** jedes der Trag-Rollelemente (4, 5) und/oder jeder der Antriebsmotoren (8, 9) eine Sensoreinrichtung zur Erfassung eines Drehwinkels aufweist.

11. Fahrzeug nach einem der vorangehenden Ansprüche, **dadurch gekennzeichnet, dass** die Stütz-Rollelemente (6, 6', 7, 7') als Räder oder drehbar gelagerte Kugeln (omnidirektionale Rollen in beliebiger Ausführung) ausgebildet sind.

12. Fahrzeug nach einem der vorangehenden Ansprüche, **dadurch gekennzeichnet, dass** in Längsrichtung des Fahrzeugs auf der der oder den Trapezschwinge(n) (10, 11, 12, 13) oder dem/den Verbindungsschenkel(n) gegenüberliegenden Seite der Trag-Rollelemente (4, 5) ausschließlich Stütz-Rollelemente (6) vorgesehen sind, deren Rotationslager an dem Rahmen unbeweglich befestigt sind.

13. Fahrzeug nach einem der vorangehenden Ansprüche mit zwei in Fahrtrichtung vor den Trag-Rollelementen angeordneten Stütz-Rollelementen und zwei in Fahrtrichtung hinter den Trag-Rollelementen angeordneten Stütz-Rollelementen, wobei wenigstens zwei, insbesondere alle vier Stütz-Rollelemente an jeweils einem schwenkbar an dem Rahmen (3) gelagerten Verbindungsschenkel gelagert sind und wobei die Lastaufnahmerichtung (2) jeweils an den Verbindungsschenkeln abgestützt ist.

14. Fahrzeug nach einem der vorangehenden Ansprüche, **dadurch gekennzeichnet, dass** zwischen wenigstens einer der Stütz-Rollelemente und der Lastaufnahmeeinrichtung (2) eine antreibbare Verstelleinrichtung vorgesehen ist, die das Anheben der Lastaufnahmeeinrichtung gegenüber dem/den Stütz-Rollelement(en) ermöglicht.

## Claims

1. A vehicle for receiving loads, comprising at least one load receiving device (2), which is supported on a frame (3), comprising at least one drive motor (8, 9), and comprising at least four roller elements (4, 5, 6, 6', 7, 7'), carrying the frame, in the form of at least two supporting roller elements (4, 5) and at least two stabilizing roller elements (6, 6', 7, 7'), two of the supporting roller elements being arranged next to one another in the travel direction of the vehicle, of which at least one, and in particular two can be driven by a drive motor (8, 9), and in each case at least one stabilizing roller element (6, 6', 6", 6"', 7, 7', 107, 107') being arranged in front of and behind the supporting roller elements (4, 5) in the straight-ahead travel direction, which corresponds to the longitudinal direction of the vehicle,
**characterized in that**
at least one connecting leg (12, 13, 112, 113), on which a rotation bearing device (101) comprising a stabilizing roller element (7, 7', 107) mounted therein, is pivotably attached to the frame (3) on at least one pivot bearing (100), and
the load receiving device is supported, on the one hand, on the connecting leg (12, 13, 112) between the pivot bearing (100) and the rotation bearing device (101) and, on the other hand, on the side of the supporting roller elements (4, 5) located opposite the connecting leg or legs (12, 13, 112, 113),
the connecting legs (12, 13, 112, 113) being designed as connecting legs of a trapezoidal link, which connects a first leg (10) and a second leg (11), the trapezoidal link (10, 11, 12, 13) being attached with the first leg (10) to the frame (3), at least one rotation bearing device (101) of one of the stabilizing roller elements (7) being attached to a second leg (11) of the trapezoidal link which is located opposite the first leg, and the load receiving device being supported on the connecting leg (12, 13) hingably connecting the first and second legs (10, 11), and in particular between the first and second legs.

2. The vehicle according to claim 1, **characterized in that** the first leg (10) and the second leg (11) are arranged behind one another in the travel direction of the vehicle at a distance that is smaller than twice the diameter of the stabilizing roller element mounted on the second leg (11), and in particular smaller than the single diameter thereof.

3. The vehicle according to claim 1 or 2, **characterized in that** the center of gravity of the vehicle, in the idle position, on a horizontal support in the longitudinal direction of the vehicle is located on the side of the supporting roller elements (4, 5) located opposite the trapezoidal link (10, 11, 12, 13) or the connecting leg (12, 13, 112, 113).

4. The vehicle according to any one of claims 1 to 3, **characterized in that** the frame and connecting leg are connected to one another free of spring elements.

5. The vehicle according to any one of the preceding claims, **characterized in that** the load receiving device (2) is supported on the connecting leg (12, 13, 112) between the first and second legs on a region that is located closer to the first leg (10) than the second leg (11), or closer to the pivot bearing (100) than the rotation bearing device (101).

6. The vehicle according to any one of the preceding claims, **characterized in that** the supporting roller elements (4, 5) are designed as wheels.

7. The vehicle according to any one of the preceding claims, **characterized in that** each of the supporting roller elements (4, 5) can be driven by way of a respective drive motor (8, 9).

8. The vehicle according to claim 7, **characterized in that** a shared control unit for activating the at least two drive motors (8, 9) of the supporting roller elements (4, 5) in a coordinated manner for steering the vehicle is provided.

9. The vehicle according to any one of the preceding claims, **characterized in that** the drive motors (8, 9) are designed as controllable electric motors.

10. The vehicle according to any one of the preceding claims, **characterized in that** each of the supporting roller elements (4, 5) and/or each of the drive motors (8, 9) comprises a sensor device for detecting a rotation angle.

11. The vehicle according to any one of the preceding claims, **characterized in that** the stabilizing roller elements (6, 6', 7, 7') are designed as wheels or rotatably mounted balls (omnidirectional rollers in any arbitrary design).

12. The vehicle according to any one of the preceding claims, **characterized in that** in the longitudinal direction of the vehicle, on the side of the supporting roller elements (4, 5) located opposite the trapezoidal link or links (10, 11, 12, 13) or the connecting leg or legs, only stabilizing roller elements (6) are provided, having rotation bearings that are immovably attached to the frame.

13. The vehicle according to any one of the preceding claims, comprising two stabilizing roller elements, arranged in front of the stabilizing roller elements in the travel direction, and two stabilizing roller elements, arranged behind the supporting roller elements in the travel direction, at least two, and in particular all four, stabilizing roller elements being mounted in each case on a connecting leg that is pivotably mounted on the frame (3), and the load receiving device (2) being supported in each case on the connecting legs.

14. The vehicle according to any one of the preceding claims, **characterized in that** a drivable adjusting device, which allows the load receiving device to be raised in relation to the stabilizing roller element(s), is provided between at least one of the stabilizing roller elements and the load receiving device (2).

## Revendications

1. Véhicule destiné au transport de charges doté d'au moins un dispositif de réception de charges (2), qui est porté sur un châssis (3), avec au moins un moteur d'entraînement (8, 9) et avec au moins quatre éléments roulants (4, 5, 6, 6', 7, 7') portant le châssis sous la forme d'au moins deux éléments roulants porteurs (4, 5) et au moins deux éléments roulants de support (6, 6', 7,7'), où deux des éléments porteurs sont disposés l'un à côté de l'autre dans le sens de la marche avant du véhicule, parmi lesquels au moins un, notamment deux, peuvent être entraînés par un moteur d'entraînement (8,9) et où, dans le sens de la marche avant en ligne droite, qui correspond à la direction longitudinale du véhicule, respectivement au moins un élément roulant de support (6, 6', 6", 6'", 7, 7', 107, 107') est disposé avant et après les éléments roulants porteurs (4, 5),
**caractérisé en ce**
**qu'**au moins un bras de liaison (12, 13, 112, 113), sur lequel est fixé un dispositif de palier de rotation (101) avec un élément roulant de support (7, 7', 107) disposé à l'intérieur, est fixé en pouvant pivoter à au moins un palier pivotant (100) au niveau du châssis (3),
et **que** le dispositif de réception de charges est appuyé, d'une part, au bras de liaison (12, 13, 112) entre le palier pivotant (100) et le dispositif de palier de rotation (101), et d'autre part, sur le côté des éléments roulants porteurs (4, 5) se situant en face du/des bras de liaison (12, 13, 112, 113),
où le bras de liaison (12, 13, 112, 113) est conçu sous forme d'un bras de liaison d'un bras oscillant trapézoïdal, qui relie un premier bras (10) et un deuxième bras (11), où le bras oscillant trapézoïdal (10, 11, 12, 13) est fixé sur le châssis (3) avec le premier bras (10), où au moins un dispositif de palier de rotation (101) d'un des éléments roulants de support (7) est fixé sur un deuxième bras (11) du bras oscillant trapézoïdal, qui est situé en face du premier bras, et où le dispositif de réception de charges est appuyé sur le bras de liaison (12, 13) reliant par pivot les premier et deuxième bras (10, 11), particulièrement entre le premier et le deuxième bras.

2. Véhicule selon la revendication 1, **caractérisé en ce que** le premier bras (10) et le deuxième bras (11) sont disposés dans le sens de la marche avant du véhicule à distance l'un derrière l'autre, distance qui est inférieure à deux fois le diamètre de l'élément roulant de support logé sur le deuxième bras (11), particulièrement inférieure à une fois son diamètre.

3. Véhicule selon la revendication 1 ou la revendication 2, **caractérisé en ce que** le centre de gravité du véhicule en position de repos se situe sur une base horizontale dans la direction longitudinale du véhicule sur le côté des éléments roulants porteurs (4, 5) situé en face du bras oscillant trapézoïdal (10, 11, 12, 13) ou du bras de liaison (12, 13, 112, 113).

4. Véhicule selon l'une des revendications 1 à 3, **caractérisé en ce que** le châssis et le bras de liaison sont reliés ensemble exempts d'éléments de ressort.

5. Véhicule selon l'une des revendications précédentes, **caractérisé en ce que** le dispositif de réception de charges (2) est appuyé sur le bras de liaison (12, 13, 112) entre le premier et le deuxième bras dans une zone qui est plus proche du premier bras (10) que du deuxième bras (11) ou plus proche du palier pivotant (100) que le dispositif de palier de rotation (101).

6. Véhicule selon l'une des revendications précédentes, **caractérisé en ce que** les éléments roulants porteurs (4, 5) sont conçus sous forme de roues.

7. Véhicule selon l'une des revendications précédentes, **caractérisé en ce que** chacun des éléments roulants porteurs (4, 5) peut être entraîné au moyen d'un moteur d'entraînement (8, 9) respectif.

8. Véhicule selon la revendication 7, **caractérisé en ce qu'**un dispositif de commande commun est prévu pour la commande coordonnée des au moins deux moteurs d'entraînement (8, 9) des éléments roulants porteurs (4, 5) pour la direction du véhicule.

9. Véhicule selon l'une des revendications précédentes, **caractérisé en ce que** les moteurs d'entraînement (8, 9) sont conçus sous forme de moteurs électriques pouvant être régulés.

10. Véhicule selon l'une des revendications précédentes, **caractérisé en ce que** chacun des éléments roulants porteurs (4, 5), et/ou chacun des moteurs d'entraînement (8, 9), présente un dispositif de détection pour la détermination d'un angle de rotation.

11. Véhicule selon l'une des revendications précédentes, **caractérisé en ce que** les éléments roulants de support (6, 6', 7, 7') sont conçus sous forme de roues ou de sphères logées en pouvant être mises en rotation (rouleaux omnidirectionnels de structure quelconque).

12. Véhicule selon l'une des revendications précédentes, **caractérisé en ce que** des éléments roulants de support (6) sont prévus exclusivement dans la direction longitudinale du véhicule sur le côté des éléments roulants porteurs (4, 5) se situant en face du/des bras de liaison ou du ou des bras oscillant(s) trapézoïdal (trapézoïdaux) (10, 11, 12, 13).

13. Véhicule selon l'une des revendications précédentes, doté de deux éléments roulants de support disposés dans le sens de la marche avant les éléments roulants porteurs et deux éléments roulants de support disposés derrière les éléments roulants porteurs, où au moins deux, notamment tous les quatre éléments roulants de support sont logés sur respectivement un bras de liaison logé en pouvant être articulé sur le châssis (3) et où le dispositif de réception de charges (2) est respectivement appuyé sur les bras de liaison.

14. Véhicule selon l'une des revendications précédentes, **caractérisé en ce qu'**un dispositif de réglage pouvant être entraîné est prévu entre au moins un des éléments roulants de support et le dispositif de réception de charges (2), dispositif de réglage qui permet le soulèvement du dispositif de réception de charges par rapport à l'élément roulant / aux éléments roulants de support.
